# EUROPÄISCHE PATENTSCHRIFT

(11) **EP 2 363 015 B1**
(45) Veröffentlichungstag und Bekanntmachung des Hinweises auf die Patenterteilung: **19.09.2012**
(21) Anmeldenummer: 11401033.3
(22) Anmeldetag: 28.02.2011
(51) Int. Cl.: A01C 7/08, A01C 7/02

(54) **Verteiler für eine pneumatische Verteilmaschine**
Distributor for a pneumatic distribution machine
Distributeur pour machine de distribution pneumatique

(30) Priorität: 04.03.2010 DE 102010000629
(43) Veröffentlichungstag der Anmeldung: 07.09.2011
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Tiessen, Reimer Uwe, 26135 Oldenburg (DE); Wilken, Martin, 26409 Wittmund (DE)

(56) Entgegenhaltungen:
- EP-A1- 0 748 580
- EP-A1- 1 342 400
- DE-U1- 29 705 999

## Beschreibung

Die Erfindung betrifft einen Verteiler für eine pneumatische Verteilmaschine gemäß des Oberbegriffes des Patentanspruches 1.

Ein derartiger Verteiler ist beispielsweise durch die DE 102 10 010 B4 bekannt. Bei diesem Verteiler ist ein Absperrschieber vorgesehen, der die Form eines zum ringförmigen Verteilerraumes konzentrischen Zylinderabschnittes aufweist. Mittels dieses Absperrschiebers können gleichzeitig mehrere Eintrittsöffnungen von Verteilerleitungen abgesperrt werden, so dass in einfacher Weise die Arbeitsbreite reduziert wird. Vergleichsversuche haben nun ergeben, dass die Aufteilung des von der Zuführleitung zugeführten Materiales auf die nicht abgesperrten Leitungen, wenn der Absperrschieber in den Verteilerraum hineingeschoben ist und mehrere Eintrittsöffnungen von Absperrleitungen absperrt, die gleichmäßige Aufteilung auf die nicht abgesperrten Verteilerleitungen nicht gegeben ist.

Der Erfindung liegt die Aufgabe zugrunde, hier auf einfache Weise Abhilfe zu schaffen.

Diese Aufgabe wird erfindungsgemäß dadurch gelöst, dass der Absperrschieber die Form eines zum ringförmigen Verteilerraum nicht konzentrischen Zylinderabschnittes aufweist, dass der Absperrschieber in seinem der Zuführleitung unmittelbar benachbarten Bereich einen Schieberabschnitt, der einen der Kreiskontur der Zuführleitung und des ringförmigen Verteilerraumes ähnlichen Krümmungsverlauf aufweist, besitzt, dass sich an diesem mittleren Bereich des Absperrschiebers jeweils auf jeder Seite ein eine entgegensetzte Krümmung aufweisender Schieberabschnitt anschließt.

Infolge dieser Maßnahmen lässt sich der Absperrschieber in einfacher Weise dahingehend optimieren, dass durch die Form des Absperrschiebers, die von der konzentrischen Ausgestaltung im Hinblick auf den Verteilerraum abweichend ist, eine Vergleichmäßigung der Aufteilung des zugeführten Materiales im Verteilerraum auf die nicht abgesperrten Leitungen erfolgt. Durch den versetzten und oder sich veränderten Krümmungsverlauf der äußeren Abschnitte des Abschieberschiebers gegenüber dem mittleren Bereich des Absperrschiebers wird eine verbesserte Gleichmäßigkeit des über die Zuführleitung in den Verteilerraum zugeführten Saatgut auf die einzelnen nicht abgesperrten Verteilerleitungen erreicht.

Die DE 297 05 999 U1 zeigt einen Verteilerkopf mit einem zugeordneten Absperrschieber, der in seinem mittlerem Bereich die Form eines zum ringförmigen Verteilerraumes konzentrischen Zylinderabschnitt aufweist. An diesen mittleren Abschnitt schließen sich geradlinig schräg nach außen verlaufende ebene Absperrschieberabschnitte an. Diese Abschnitte schließen in ihrer Absperrstellung unmittelbar an die Wandlungen der Eingangsöffnungen der Abgangsleitung an. Somit kann keine Luft zwischen den Seitenenden der Absperrschieberabschnitte und den Wandlungen der Eingangsöffnungen der Abgangsleitungen entweichen.

Versuche haben gezeigt, dass diese ausreichend gut gleichmäßige Aufteilung des Saatgutes auf die nicht abgesperrten Leitungen in einer Ausführungsform sich dadurch erreichen lässt, dass der Absperrschieber in seinem der Zuführleitung unmittelbar benachbarten Bereich einen zumindest annähernd ringförmigen Zylinderabschnitt, der sich über einen Bereich zwischen 70° und 120°, vorzugsweise etwa 90° erstreckt und zumindest annähernd konzentrisch zu der Kreiskontur der Zuführleitung des ringförmigen Verteilerraumes verläuft, aufweist, dass sich an diesem mittleren Bereich des Absperrschiebers sich mit zu dem mittleren als Kreisabschnitt ausgebildeten Bereich jeweils auf jeder Seite ein eine entgegensetzte Krümmung aufweisender Schieberabschnitt anschließt.

Die gleichmäßige Aufteilung des Saatgutes im Verteilerkopf bei Absperrung eines Teiles der Verteilerleitungen auf nur einen Teil der Verteilerleitungen lässt sich dadurch erreichen, dass der Absperrschieber einen wellenförmigen Konturenverlauf aufweist. Der erfindungsgemäße Verlauf des Absperrschiebers weist in Draufsicht einen Konturenverlauf auf, der dem Querschnitt eines tief gezogenen Suppentellers mit Tellerrand ähnelt.

Um eine möglichst scharfe Abtrennung des abgesperrten Verteilerraumes mit den zugehörigen abzusperrenden Verteilerleitungen, deren Eingangsöffnungen kein Saatgut zugeführt werden soll, und dem nicht abgesperrten Bereich des Verteilerraumes lässt sich dadurch erreichen, dass die beiden äußeren Eckbereiche des Schiebers in ebene Flächenelement auslaufen, dass an die ebenen Flächenelemente angelegte Geraden zumindest annähernd den Außenumfang des Querschnittes der Zuführungsleitung streifen und/oder berühren.

Weiterhin hat sich durch Versuche zur Überprüfung der Ausgestaltung für eine gute scharfe Abgrenzung gezeigt, dass vorteilhaft ist, dass die beiden äußeren Eckbereiche des Schiebers in ebene Flächenelemente auslaufen und derart angeordnet sind, dass an die ebenen Flächenelemente angelegte Geraden auf die Zwischenwand zwischen zwei Eintrittsöffnungen der Verteilerleitungen jeweils ausgerichtet sind.

Der erfindungsgemäße Absperrschieber findet bevorzugt Anwendung zur Absperrung der halben Anzahl der am Verteilerkopf angeschlossenen Verteilerleitungen, die Ausbringelementen, wie beispielsweise Säscharen führen.

Weitere Einzelheiten der Erfindung sind der Beispielsbeschreibung und den Zeichnungen zu entnehmen. Hierbei zeigen
- Fig. 1: den Verteilerkopf eines pneumatischen Verteil- und Dosiersystems mit im Halbschnitt dargestellten Verteilerkopfdeckel, wobei der Absperrschieber sich in seiner Absperrposition befindet, in perspektivischer Darstellung,
- Fig. 2: den Verteilerkopf in der Darstellungsweise nach Fig. 1, in Draufsicht und
- Fig. 3: einen weiteren Verteilerkopf in der Darstellung nach Fig. 2, wobei der Absperrschieber anders ausgestaltet ist.

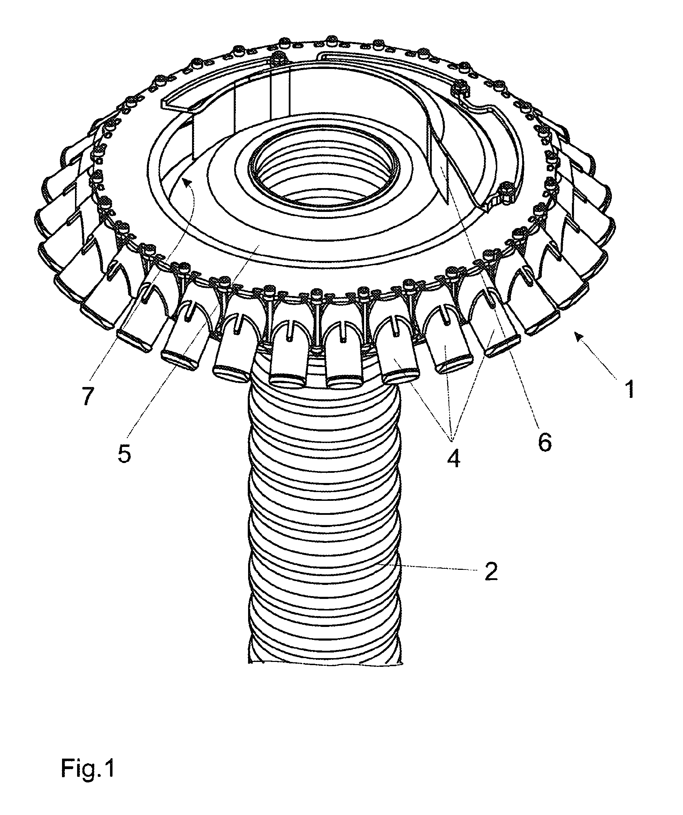

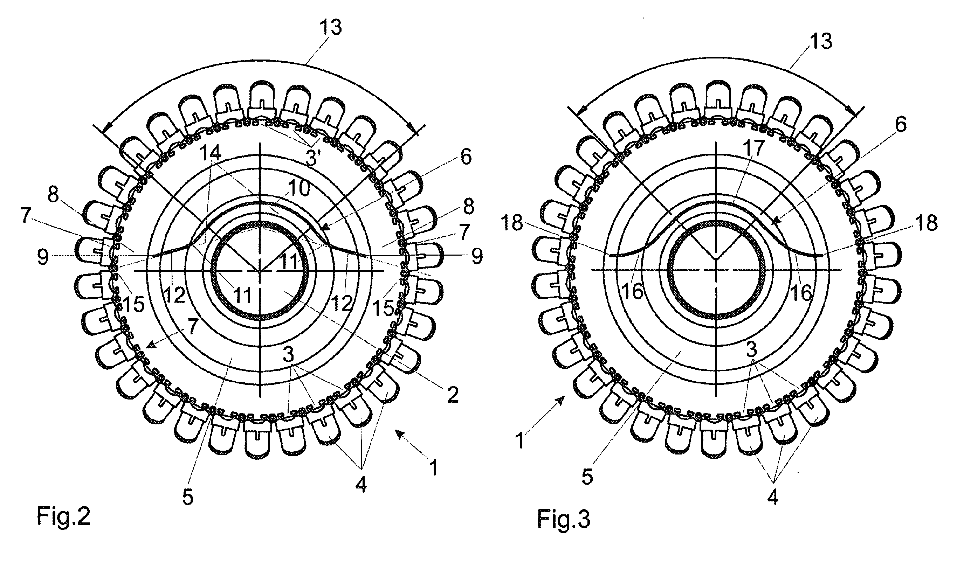

Der in den Fig. 1 und 2 dargestellte Verteilerkopf 1 ist Bestandteil eines pneumatischen Dosier- und Verteilsystems einer pneumatischen arbeitenden landwirtschaftlichen Verteilmaschine.

Über das Zuführrohr 2, welches mit einem pneumatischen Förderluftstrom, der von einem motorisch angetriebenen Gebläse erzeugt wird, beaufschlagt ist, wird dem am Ende des Zuführrohres 2 angeordneten Verteilerkopf 1 das auszubringende Material, beispielsweise Saatgut oder Dünger in einstellbarer Weise zugeführt. Über den Verteilerkopf 1 wird das Material in bekannter Weise auf die zu einzelnen Ausbringorganen führende Eintrittsöffnungen 3 aufweisenden Verteilerleitungen 4 aufgeteilt.

Der Verteilerraum 5 des Verteilerkopfes 1 ist ringförmig ausgestaltet. Von dem Verteilerkopf 1 aus führen, wie bereits erwähnt, mehrere Zuführleitungen 4, die Eintrittsöffnungen 3 aufweisen, weg.

Dem Verteilerkopf 1 ist ein Absperrschieber 6, der von unten in den Verteilerraum 5 des Verteilerkopfes 1 einschiebbar ist, zugeordnet. Dieser Absperrschieber 6 ist in den Verteilerraum 5 zum Absperren einzuschieben, so dass also einige Eintrittsöffnungen 3 der Verteilerleitungen 4 absperrbar sind, und aus dem Verteilerraum 5 herausbewegbar, so dass das zugeführte Material auf alle Eintrittsöffnungen 3 der Verteilerleitungen 4 in gleichmäßiger Weise aufgeteilt wird.

Der Absperrschieber 6 ist in seiner Absperrstellung entsprechend der Fig. 1 beabstandet zu den Eintrittsöffnungen 3 der Verteilerleitungen 4 und zu den Seitenwandungen 7 des Verteilerraumes 5 angeordnet, so dass die Luft von der Zuführleitung 2 zu den Eintrittsöffnungen 3' der abgesperrten Verteilerleitungen durch den Zwischenraum 8 zwischen den Seitenenden 9 des Absperrschiebers 6 und den benachbarten Seitenwandungen 7 des Verteilerkopfes 1 gelangt, wie Fig. 1 und 2 zeigen.

Der Absperrschieber 6 weist, wie in Fig. 2 erkennbar ist, die Form eines zum ringförmigen Verteilerraum 5 nicht konzentrischen Zylinderabschnittes auf. Der Absperrschieber besitzt in seinem der Zuführleitung 2 unmittelbar benachbarten Bereich einen Schieberabschnitt 10, der einen der Kreiskontur der Zuführleitung 2 und des ringförmigen Verteilerraumes 5 ähnlichen und/oder angepassten Krümmungsverlauf aufweist. An diesem mittleren Bereich 10 des Absperrschiebers 6 schließen sich jeweils auf jeder Seite ein eine entgegen gesetzte Krümmung aufweisende Schieberabschnitte 11 an. Diese Abschnitte 11 laufen in gerade Flächen 12 aus.

Der Absperrschieber 6 weist in seinem der Zuführleitung 2 unmittelbar benachbarten Bereich einen zumindest annähernd ringförmigen Zylinderabschnitt 10 auf, der sich über einen Bereich 13 zwischen 70° und 120°, vorzugsweise etwa 90°, im Ausführungsbeispiel gemäß Fig. 2 über 98° erstreckt und zumindest annähernd konzentrisch zu der Kreiskontur der Zuführleitung 2 und des ringförmigen Verteilerraumes verläuft. An diesem mittleren Bereich 10 des Absperrschiebers 6 schließen sich mit zum dem mittleren als Kreisabschnitt ausgebildeten Bereich 10 jeweils auf jeder Seite eine entgegen gesetzte Krümmung aufweisende Schieberabschnitte 11 an, die im Ausführungsbeispiel gemäß Fig. 2 in eine gerade Fläche auslaufen. Der Absperrschieber 6 weist somit einen wellenförmigen Konturenverlauf auf. Weiterhin ist dieser Konturenverlauf so, dass er dem Querschnitt eines tief gezogenen Suppentellers mit Tellerrand ähnelt.

Weiterhin laufen, wie bereits erwähnt, die beiden äußeren Eckbereiche des Schiebers 6 in ebene Flächenelemente 13 aus. An die ebenen Flächenelemente 13 angelegte Geraden 14 streifen und/oder berühren zumindest annähernd den Außenumfang des Querschnittes der Zuführungsleitung 2 , wie Fig. 2 zeigt.

Außerdem laufen die äußeren Eckbereiche des Schiebers 6 in ebene Flächenelemente 13 aus und sind derart angeordnet, dass, wie die Fig. 2 zeigt, die an die ebenen Flächenelemente 13 angelegten Geraden 14 auf die Zwischenwand 15 zwischen zwei Eintrittsöffnungen 3 der Verteilerleitungen 4 jeweils ausgerichtet sind. Der Schieber 6 kann mittels nicht dargestellter motorischer Elemente in eine Außerbetriebsposition aus dem Verteilerraum 5 herausgezogen werden, dass er die gleichmäßige Verteilung des über die Zuführleitung 2 dem Verteilerraum 5 pneumatisch zugeführten Saatgutes nicht stört, so dass sich in dem Verteilerraum 5 das Saatgut in gleichmäßiger Weise auf die einzelnen zu den Verteilerleitungen 4 führenden Eintrittsöffnungen 3 aufteilen kann.

Weiterhin kann mittels des motorischen Einstellelementes der Absperrschieber 6 in die in Fig. 1 dargestellte Absperrposition gebracht werden, so dass die Hälfte der Eintrittsöffnungen 3 bzw. die Verteilerleitungen 4 von dem übrigen Verteilerraum abgesperrt werden können.

Der Schieber 6 gemäß Fig. 3 unterscheidet sich von dem Schieber gemäß Fig. 2 dadurch, dass die Abschnitte 16, die sich an dem mittleren Bereich 17 des Absperrschiebers 6 anschließen, nicht in ebene Flächen auslaufen, sondern bis zu ihrem Ende 18 mit einer Krümmung versehen sind.

## Patentansprüche

1. Verteiler für eine pneumatische Verteilmaschine für Saatgut, Dünger und dergleichen mit folgenden Merkmalen:
1.1. einen ringförmigen Verteilerraum (5) definierenden Verteilerkopf (1),
1.2. in den Verteilerkopf (1) mündet mindestens eine Zuführleitung (2)
1.3. an den Verteilerkopf (1) schließen, mit Abstand zu der Zuführleitung (2), Verteilerleitungen (4) an,
1.4. zumindest einen Absperrschieber (6),
1.5. der Absperrschieber (6) ist in den ringförmigen Verteilerraum (5) einschiebbar und aus diesem heraus bewegbar und zwar derart, dass die Seitenenden des Absperrschiebers (6) in seiner Absperrstellung beabstandet zu den Eintrittsöffnungen (3) der Verteilerleitungen (4) und/oder zu den Seitenwandungen des Verteilerraumes (5) angeordnet sind, so dass Luft von der Zuführleitung zu den Eintrittsöffnungen (3) der abgesperrten Verteilerleitungen durch den Raum zwischen den Seitenenden des Absperrschiebers (6) und der benachbarten Seitenwandung des Verteilerraumes (5) gelangt,
**dadurch gekennzeichnet,**
**dass** der Absperrschieber (6) die Form eines zum ringförmigen Verteilerraum (5) nicht konzentrischen Zylinderabschnittes aufweist, dass der Absperrschieber (6) in seinem der Zuführleitung (2) unmittelbar benachbarten Bereich einen Schieberabschnitt (10, 17), der einen der Kreiskontur der Zuführleitung (2) und des ringförmigen Verteilerraumes (5) ähnlichen Krümmungsverlauf aufweist, besitzt, dass sich an diesem mittleren Bereich (10, 17) des Absperrschiebers (6) jeweils auf jeder Seite ein eine entgegensetzte Krümmung aufweisender Schieberabschnitt (11, 12,16) anschließt.

2. Verteiler nach Anspruch 1, **dadurch gekennzeichnet, dass** der Absperrschieber (6) in seinem der Zuführleitung (2) unmittelbar benachbarten Bereich (10, 17) einen zumindest annähernd ringförmigen Zylinderabschnitt, der sich über einen Bereich (13) zwischen 70° und 120°, vorzugsweise etwa 90° erstreckt und zumindest annähernd konzentrisch zu der Kreiskontur der Zuführleitung (2) des ringförmigen Verteilerraumes (5) verläuft, aufweist, dass sich an diesem mittleren Bereich (10, 17) des Absperrschiebers (6) sich mit zu dem mittleren als Kreisabschnitt ausgebildeten Bereich (10, 17) jeweils auf jeder Seite ein eine entgegensetzte Krümmung aufweisender Schieberabschnitt (11, 12, 16) anschließt.

3. Verteiler nach Anspruch 1, **dadurch gekennzeichnet, dass** der Absperrschieber (6) einen wellenförmigen Konturenverlauf aufweist.

4. Verteiler nach Anspruch 1, **dadurch gekennzeichnet, dass** der Absperrschieber (6) einen Konturenverlauf aufweist, der dem Querschnitt eines tief gezogenen Suppentellers mit Tellerrand ähnelt.

5. Verteiler nach zumindest einem der vorstehenden Ansprüche, **dadurch gekennzeichnet, dass** die beiden äußeren Eckbereiche des Schiebers (6) in ebene Flächenelemente (12) auslaufen, dass an die ebenen Flächenelemente (12) angelegte Geraden (14) zumindest annähernd den Außenumfang des Querschnittes der Zuführungsleitung (2) streifen und/oder berühren.

6. Verteiler nach zumindest einem der vorstehenden Ansprüche, **dadurch gekennzeichnet, dass** die beiden äußeren Eckbereiche des Schiebers (6) in ebene Flächenelemente (12) auslaufen und derart angeordnet sind, dass an die ebenen Flächenelemente (12) angelegte Geraden (14) auf die Zwischenwand (15) zwischen zwei Eintrittsöffnungen (3) der Verteilerleitungen (4) jeweils ausgerichtet sind.

## Claims

1. Distributor for a pneumatic distribution machine for seeds, fertilizer and the like, having the following features:
1.1. a distributor head (1) defining an annular distributor space (5),
1.2. at least one feed line (2) leads into the distributor head (1),
1.3. distributor lines (4) are connected to the distributor head (1), at a distance from the feed line (2),
1.4. at least one shut-off slider (6),
1.5. the shut-off slider (6) is pushable into the annular distributor space (5) and is movable out of the latter, specifically in such a manner that the side ends of the shut-off slider (6), in the shut-off position thereof, are spaced apart from the inlet openings (3) of the distributor lines (4) and/or from the side walls of the distributor space (5) such that air passes from the feed line to the inlet openings (3) of the shut-off distributor lines through the space between the side ends of the shut-off slider (6) and the adjacent side wall of the distributor space (5),
**characterized**
**in that** the shut-off slider (6) is in the form of a cylinder section which is not concentric with respect to the annular distributor space (5), in that that region of the shut-off slider (6) which is directly adjacent to the feed line (2) has a slider section (10, 17) which has a curvature profile similar to the circular contour of the feed line (2) and of the annular distributor space (5), and in that both sides of said central region (10, 17) of the shut-off slider (6) are adjoined by a slider section (11, 12, 16) having an opposite curvature.

2. Distributor according to Claim 1, **characterized in that** that region (10, 17) of the shut-off slider (6) which is directly adjacent to the feed line (2) has an at least approximately annular cylinder section which extends over a region (13) of between 70° and 120°, preferably approximately 90°, and runs at least approximately concentrically with respect to the circular contour of the feed line (2) of the annular distributor space (5), and **in that** both sides of said central region (10, 17) of the shut-off slider (6), with the central region (10, 17) designed as a circular section, are adjoined by a slider section (11, 12, 16) having an opposite curvature.

3. Distributor according to Claim 1, **characterized in that** that the shut-off slider (6) has an undulating contour profile.

4. Distributor according to Claim 1, **characterized in that** the shut-off slider (6) has a contour profile which resembles the cross section of a deep-drawn dinner plate with a plate edge.

5. Distributor according to at least one of the preceding claims, **characterized in that** the two outer corner regions of the slider (6) merge into planar surface elements (12), and **in that** straight lines (14) applied to the planar surface elements (12) at least approximately brush against and/or touch the outer circumference of the cross section of the feed line (2).

6. Distributor according to at least one of the preceding claims, **characterized in that** the two outer corner regions of the slider (6) merge into planar surface elements (12) and are arranged in such a manner that straight lines (14) applied to the planar surface elements (12) are in each case aligned with the intermediate wall (15) between two inlet openings (3) of the distributor lines (4).

## Revendications

1. Distributeur pour une machine de distribution pneumatique de semences, d'engrais et similaires, comprenant les caractéristiques suivantes :
1.1. une tête de distribution (1) définissant un espace de distribution annulaire (5),
1.2. au moins une conduite d'alimentation (2) débouche dans la tête de distribution (1), 1.3. à la tête de distribution (1) se raccordent, à distance de la conduite d'alimentation (2), des conduites de distribution (4),
1.4. au moins une vanne d'arrêt (6),
1.5. la vanne d'arrêt (6) peut être introduite dans l'espace de distribution annulaire (5) et ressortie de celui-ci et ce de telle sorte que les extrémités latérales de la vanne d'arrêt (6), dans sa position d'arrêt, soient disposées à distance des ouvertures d'entrée (3) des conduites de distribution (4) et/ou des parois latérales de l'espace de distribution (5), de sorte que de l'air parvienne depuis la conduite d'alimentation jusqu'aux ouvertures d'entrée (3) des conduites de distribution bloquées à travers l'espace entre les extrémités latérales de la vanne d'arrêt (6) et la paroi latérale adjacente de l'espace de distribution (5),
**caractérisé en ce que**
la vanne d'arrêt (6) présente la forme d'une portion cylindrique non concentrique par rapport à l'espace de distribution annulaire (5), **en ce que** la vanne d'arrêt (6) possède, dans sa région directement adjacente à la conduite d'alimentation (2), une portion de vanne (10, 17) qui présente une allure courbe similaire au contour circulaire de la conduite d'alimentation (2) et de l'espace de distribution annulaire (5), et **en ce qu'**une portion de vanne (11, 12, 16) présentant une courbure inverse se raccorde à chaque fois de chaque côté à cette région centrale (10, 17) de la vanne d'arrêt (6).

2. Distributeur selon la revendication 1, **caractérisé en ce que** la vanne d'arrêt (6) présente, dans sa région (10, 17) directement adjacente à la conduite d'alimentation (2), une portion cylindrique au moins approximativement annulaire, qui s'étend sur une région (13) comprise entre 70° et 120°, de préférence d'environ 90°, et qui s'étend au moins approximativement concentriquement par rapport au contour circulaire de la conduite d'alimentation (2) de l'espace de distribution annulaire (5), et **en ce qu'**une portion de vanne (11, 12, 16) présentant une courbure inverse par rapport à la région centrale (10, 17) réalisée sous forme de portion circulaire, se raccorde à chaque fois de chaque côté à cette région centrale (10, 17) réalisée sous forme de portion circulaire.

3. Distributeur selon la revendication 1, **caractérisé en ce que** la vanne d'arrêt (6) présente un contour d'allure ondulée.

4. Distributeur selon la revendication 1, **caractérisé en ce que** la vanne d'arrêt (6) présente un contour qui a une allure similaire à la section transversale d'une assiette à soupe creuse avec un bord d'assiette.

5. Distributeur selon au moins l'une quelconque des revendications précédentes, **caractérisé en ce que** les deux régions de coin extérieures de la vanne (6) se terminent par des éléments de surface plans (12), et **en ce que** des droites (14) tracées sur les éléments de surface plans (12) effleurent et/ou viennent en contact au moins approximativement avec la circonférence extérieure de la section transversale de la conduite d'alimentation (2).

6. Distributeur selon au moins l'une quelconque des revendications précédentes, **caractérisé en ce que** les deux régions de coin extérieures de la vanne (6) se terminent par des éléments de surface plans (12) et sont disposées de telle sorte que des droites (14) tracées sur les éléments de surface plans (12) soient à chaque fois orientées vers la paroi intermédiaire (15) entre deux ouvertures d'entrée (3) des conduites de distribution (4).
